# EUROPEAN PATENT APPLICATION

(11) **EP 4 810 206 A1**
(43) Date of publication of application: **23.09.2026**
(21) Application number: 25192445.2
(22) Date of filing: 29.07.2025
(51) Int. Cl.: B25J 9/16

(54) **INFORMATION PROCESSING SYSTEM, INFORMATION PROCESSING PROGRAM, AND INFORMATION PROCESSING METHOD**

(30) Priority: 17.03.2025 JP 2025042822
(71) Applicant: FUJIFILM Business Innovation Corp., Minato-ku Tokyo (JP)
(72) Inventor: TAKEUCHI, Shunsuke, Tokyo (JP)
(74) Representative: Becker Kurig & Partner Patentanwälte mbB

(57) **Abstract**

An information processing system includes a processor configured to: acquire input information including information related to printing paper; acquire a parameter related to a robot that performs an operation on the printing paper, which is output from a training model by inputting the input information to the training model; and output the parameter.

## Description

### BACKGROUND OF THE INVENTION

### (i) Field of the Invention

The present disclosure relates to an information processing system, an information processing program, and an information processing method.

### (ii) Description of Related Art

JP4041837B discloses an article holding system including a recognition device that recognizes a state of a holding target object, a holding method specifying section that specifies a holding method according to the state recognized by the recognition device, and a holding device that executes holding of the holding target object according to the holding method specified by the holding method specifying section.

### SUMMARY OF THE INVENTION

The introduction of a robot is considered as one of the measures for improving labor-intensive printing industry. The product handled in the printing industry is printing paper, and the size, state, and shape of the printing paper vary depending on humidity, temperature, and the quality of the manufacturer of the printing paper. Therefore, in a case of introducing the robot, it is necessary to individually perform teaching according to the variation in the printing paper. A program generated by the teaching includes parameters such as the operation speed, coordinates, trajectory, external cooperation, and various variables of the robot as one of the components, and in this case, it is necessary to repeat the setting of the parameters and the operation test of the robot many times, which is time-consuming. In addition, it is necessary to set different parameters for different printing papers, and the introduction of the robot for printing papers in different states has not progressed.

Therefore, an object of the present disclosure is to provide an information processing system, an information processing program, and an information processing method capable of predicting a parameter related to a robot for a printing paper in accordance with the printing paper.

In order to accomplish the object, according to a first aspect of the present disclosure, there is provided an information processing system including: a processor configured to: acquire input information including information related to printing paper; acquire a parameter related to a robot that performs an operation on the printing paper, which is output from a training model by inputting the input information to the training model; and output the parameter.

An information processing system according to a second aspect of the present disclosure is the information processing system according to the first aspect, in which the information related to the printing paper may include information related to a manufacturer of the printing paper, a type of the printing paper, a size of the printing paper, a weight of the printing paper, or the number of days elapsed since the printing paper has been delivered.

An information processing system according to a third aspect of the present disclosure is the information processing system according to the first aspect or the second aspect, in which the input information may further include information related to an image printed on the printing paper, information related to an environment of a printing apparatus, or information related to the robot.

An information processing system according to a fourth aspect of the present disclosure is the information processing system according to any one of the first to third aspects, in which the processor may be configured to: acquire a program related to the robot, which includes the parameter corresponding to the input information, by inputting the input information to the training model; and output the program.

An information processing system according to a fifth aspect of the present disclosure is the information processing system according to any one of the first to fourth aspects, in which the training model may be a large-scale language model, and the processor may be configured to: acquire the parameter related to the robot from an output of the large-scale language model by inputting the input information and a prompt sentence for giving an instruction to output the parameter related to the robot to the large-scale language model.

An information processing system according to a sixth aspect of the present disclosure is the information processing system according to any one of the first to fifth aspects, in which the processor may be configured to: acquire a result of the operation of the robot, which is instructed by a program including the generated parameter; acquire the parameter output from the training model by inputting the input information including the acquired result to the training model; and output the acquired parameter.

According to a seventh aspect of the present disclosure, there is provided an information processing program causing a computer to execute: acquiring input information including information related to printing paper; acquiring a parameter related to a robot that performs an operation on the printing paper, which is output from a training model by inputting the input information to the training model; and outputting the parameter.
According to an eighth aspect of the present disclosure, there is provided an information processing method including: acquiring input information including information related to printing paper; acquiring a parameter related to a robot that performs an operation on the printing paper, which is output from a training model by inputting the input information to the training model; and outputting the parameter.

According to the first aspect of the present disclosure, it is possible to predict the parameter related to the robot for the printing paper according to the printing paper.

According to the second aspect of the present disclosure, it is possible to predict the parameter related to the robot with respect to the printing paper in consideration of the information related to the manufacturer of the printing paper, the type of the printing paper, the size of the printing paper, the weight of the printing paper, or the number of days elapsed since the printing paper has been delivered.

According to the third aspect of the present disclosure, it is possible to predict the parameter related to the robot for the printing paper based on information related to an image printed on the printing paper, information related to an environment of the printing apparatus, or information related to the robot.

According to the fourth aspect of the present disclosure, it is possible to predict the program related to the robot for the printing paper according to the printing paper.

According to the fifth aspect of the present disclosure, it is possible to predict the parameter related to the robot for the printing paper using the large-scale language model.

According to the sixth aspect of the present disclosure, it is possible to predict the parameter related to the robot for the printing paper based on the result of the operation of the robot.

According to the seventh aspect of the present disclosure, it is possible to predict the parameter related to the robot for the printing paper according to the printing paper.
According to the eighth aspect of the present disclosure, it is possible to predict the parameter related to the robot for the printing paper according to the printing paper.

### BRIEF DESCRIPTION OF THE DRAWINGS

Exemplary embodiment(s) of the present invention will be described in detail based on the following figures, wherein:
FIG. 1 is a diagram showing a schematic configuration of an information processing system according to the present exemplary embodiment;
FIG. 2 is a block diagram showing a main configuration of electrical systems of a printing apparatus in the information processing system according to the present exemplary embodiment;
FIG. 3 is a block diagram showing a main configuration of an electric system of a server and a management apparatus in the information processing system according to the present exemplary embodiment;
FIG. 4 is a functional block diagram showing a functional configuration of a management apparatus in the information processing system according to the present exemplary embodiment;
FIG. 5 is a functional block diagram showing a functional configuration of the server in the information processing system according to the present exemplary embodiment;
FIG. 6 is a diagram showing an example of training data;
FIG. 7 is a diagram showing an example of training data;
FIG. 8 is a diagram showing an example of a trained neural network model;
FIG. 9 is a diagram showing an example of input information;
FIG. 10 is a diagram showing an example of parameters;
FIG. 11 is a flowchart showing an example of a flow of a training process performed by the server of the information processing system according to the present exemplary embodiment;
FIG. 12 is a flowchart showing an example of a flow of an estimation process performed by a server of the information processing system according to the first exemplary embodiment;
FIG. 13 is a diagram showing an example of a template of a prompt sentence;
FIG. 14 is a diagram showing an example of a program; and
FIG. 15 is a flowchart showing an example of a flow of an estimation process performed by a server of an information processing system according to a second exemplary embodiment.

### DETAILED DESCRIPTION OF THE INVENTION

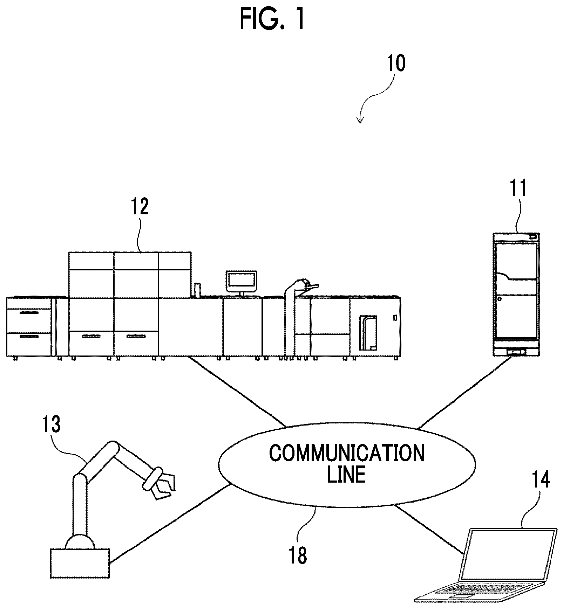

Hereinafter, an example of the present exemplary embodiment will be described in detail with reference to the drawings. In the present exemplary embodiment, an information processing system in which a management apparatus, a printing apparatus, a robot, a server, and the like are connected to each other via a communication line such as various networks will be described as an example. FIG. 1 is a diagram showing a schematic configuration of an information processing system 10 according to the present exemplary embodiment.

### [First Exemplary Embodiment]

As shown in FIG. 1, the information processing system 10 according to the present exemplary embodiment includes a server 11, a printing apparatus 12, a management apparatus 14, and the like. The server 11, the printing apparatus 12, the robot 13, and the management apparatus 14 are connected to each other via a communication line 18 such as a Local Area Network (LAN), a Wide Area Network (WAN), the Internet, or an intranet. Then, each of the server 11, the printing apparatus 12, the robot 13, and the management apparatus 14 can transmit and receive various types of data to and from each other via the communication line 18. In the present exemplary embodiment, an image corresponding to a printing instruction is formed in the printing apparatus 12 in such a way that printing is instructed from the management apparatus 14 to the printing apparatus 12. In addition, the management apparatus 14 instructs the robot 13 to grip the printing paper, and the robot 13 grips the printing paper in response to the instruction.

In FIG. 1, although one server 11, one printing apparatus 12, one robot 13, and one management apparatus 14 are illustrated, a plurality of servers 11, a plurality of printing apparatuses 12, a plurality of robots 13, and a plurality of management apparatuses 14 may be provided, or any one of the server 11, the printing apparatus 12, the robot 13, or the management apparatus 14 may be provided in a plurality.

Examples of the printing apparatus 12 according to the present exemplary embodiment include an offset printer and a digital printer. Hereinafter, a case where the printing apparatus 12 has a plurality of functions such as a printing function of performing a printing process and a post-processing function of performing a post-processing on printed paper will be described as an example. The plurality of functions may include a scanning function of scanning a manuscript to obtain image information indicating the manuscript, a duplicating function of duplicating an image recorded in the manuscript on paper, a facsimile function of transmitting and receiving various data via a telephone line (not shown), a transfer function of transferring manuscript information such as the image information scanned by the scanning function, and an accumulating function of accumulating the manuscript information such as the scanned image information.

In the following description, the facsimile function may be referred to as a facsimile, the scanning function may be referred to as a scan, the printing function may be referred to as a print, and the duplicating function may be referred to as a copy.

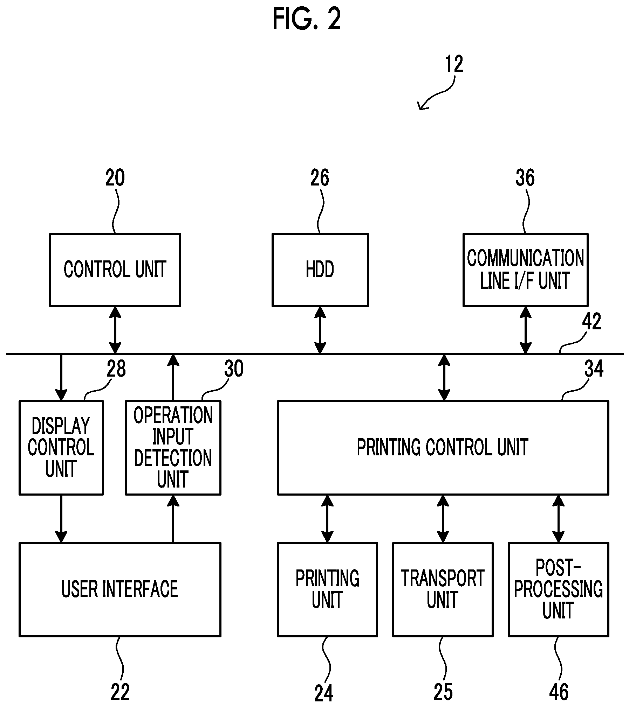

FIG. 2 is a block diagram showing a main configuration of electric systems of the printing apparatus 12 in the information processing system 10 according to the present exemplary embodiment.

As shown in FIG. 2, the printing apparatus 12 according to the present exemplary embodiment includes a control unit 20. The control unit 20 may include a Central Processing Unit (CPU), a Read Only Memory (ROM), and a Random Access Memory (RAM).

On the other hand, the printing apparatus 12 according to the present exemplary embodiment includes a Hard Disk Drive (HDD) 26 that stores various data, application programs, and the like. In addition, the printing apparatus 12 includes a display control unit 28 that is connected to a user interface 22 and controls the display of various operation screens and the like on the display of the user interface 22. Further, the printing apparatus 12 includes an operation input detection unit 30 that is connected to the user interface 22 and detects an operation instruction input via the user interface 22. In the printing apparatus 12, the HDD 26, the display control unit 28, and the operation input detection unit 30 are electrically connected to a system bus 42. In the printing apparatus 12 according to the present exemplary embodiment, the HDD 26 is applied as a storage unit, but the present disclosure is not limited thereto, and a non-volatile storage unit such as a flash memory may be applied. In addition, in the present exemplary embodiment, a touch panel that can perform display and operation input is applied to the user interface 22, but the present disclosure is not limited thereto, and a user interface in which a display and an operation unit are separate may be applied.

In addition, the printing apparatus 12 according to the present exemplary embodiment includes a printing control unit 34 that controls the printing process by the printing unit 24, the transport of the paper to the printing unit 24 by the transport unit 25, and the post-treatment by the post-processing unit 46. The printing apparatus 12 may include a scanning control unit that controls an optical image reading operation by a manuscript scanning unit and a manuscript feeding operation by a manuscript transport unit. In addition, the printing apparatus 12 includes a communication line interface (I/F) unit 36 that is connected to the communication line 18 and transmits and receives communication data to and from another external apparatus, such as the management apparatus 14, connected to the communication line 18. Further, the printing apparatus 12 may include a facsimile interface (I/F) unit that is connected to a telephone line (not shown) and transmits and receives facsimile data to and from a facsimile apparatus connected to the telephone line. In addition, the printing apparatus 12 may include a transmission and reception control unit that controls transmission and reception of the facsimile data via the facsimile I/F unit. Moreover, in the printing apparatus 12, the printing control unit 34 and the communication line I/F unit 36 are electrically connected to a system bus 42.

With the above configuration, the printing apparatus 12 according to the present exemplary embodiment executes control of display of an operation screen and information, such as various messages, on the display of the user interface 22 via the display control unit 28 by the control unit 20. In addition, the printing apparatus 12 executes, by the control unit 20, each of the control of the operation of the printing unit 24, the transport unit 25, and the post-processing unit 46 via the printing control unit 34, and the control of the transmission and reception of the communication data via the communication line I/F unit 36. Further, the printing apparatus 12 grasps operation content in the user interface 22 based on operation information, which is detected by the operation input detection unit 30, by the control unit 20 and executes various controls based on the operation content.

As an example of the applications stored in the HDD 26, in the present exemplary embodiment, an application that executes a function such as printing is included.

In the present exemplary embodiment, in a case in which the post-processing unit 46 is operated in the printing apparatus 12, the robot 13 performs gripping, handling, moving, cutting, and the like of the printing paper in accordance with the operation of the post-processing unit 46. A program for the robot 13 to grip, handle, move, and cut the printing paper is installed on the robot 13 from the management apparatus 14. In a case where the robot 13 performs "handling", for example, the robot 13 grips the printing paper and twists the printing paper to insert air between each sheet of the printing paper. A processing machine may be provided downstream of the printing apparatus 12, and the robot 13 may be operated between the printing apparatus 12 and the processing machine.

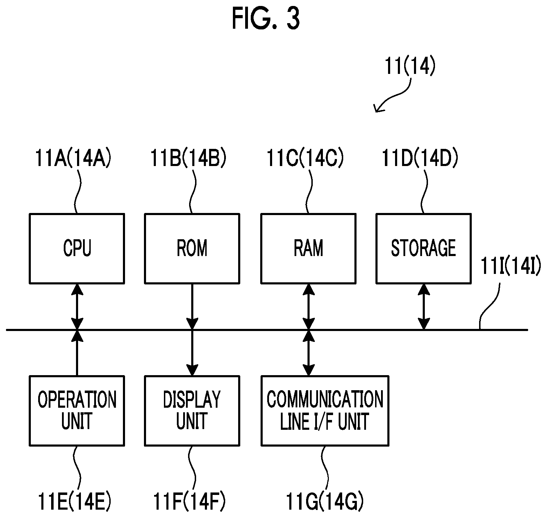

Subsequently, a main configuration of an electrical system of the server 11 and the management apparatus 14 according to the present exemplary embodiment will be described. FIG. 3 is a block diagram showing a main configuration of an electrical system of the server 11 and the management apparatus 14 in the information processing system 10 according to the present exemplary embodiment. Since the server 11 and the management apparatus 14 have a general computer configuration, the server 11 will be described below as a representative.

As illustrated in FIG. 3, the server 11 according to the present exemplary embodiment includes a CPU 11A as an example of a processor, a ROM 11B, a RAM 11C, a storage 11D, an operation unit 11E, a display unit 11F, and a communication line interface (I/F) unit 11G. The CPU 11A controls the overall operation of the server 11. The ROM 11B stores various control programs, various parameters, and the like in advance. The RAM 11C is used as a work area or the like in a case where various programs are executed by the CPU 11A. The storage 11D stores various data, application programs, and the like. The operation unit 11E is used to input various types of information. The display unit 11F is used for display of the various types of information. The communication line I/F unit 11G is connected to the communication line 18 and transmits and receives various data to and from other apparatuses connected to the communication line 18. In addition, the communication line I/F unit 11G may have a configuration capable of directly communicating with each device by using various well-known wireless communications. Each part of the above server 11 is electrically connected by a system bus 11I. In the server 11 according to the present exemplary embodiment, the storage 11D is applied as a storage unit, but as an example of the storage, a non-volatile storage unit, such as a Hard Disk Drive (HDD) or a flash memory, is applied.

With such a configuration, in the server 11 according to the present exemplary embodiment, the CPU 11A executes accesses to the ROM 11B, the RAM 11C, and the storage 11D, acquisition of various types of data via the operation unit 11E, and display of various types of information on the display unit 11F. Further, the server 11 uses the CPU 11A to control the transmission/reception of communication data via the communication line I/F unit 11G.

In the information processing system 10 having the above-described configuration, the management apparatus 14 manages a series of manufacturing procedures. The series of manufacturing procedures includes, for example, a manufacturing procedure, a pre-press procedure, a plate-making procedure, a printing procedure, a processing procedure, and a distribution procedure.

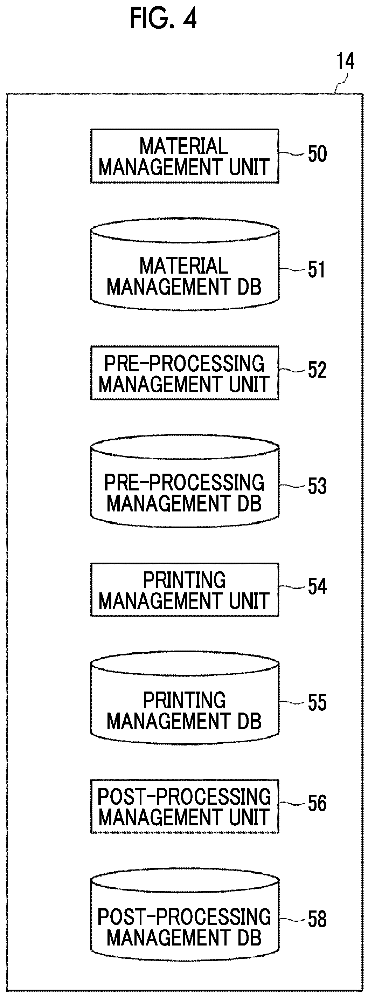

Next, a functional configuration of the management apparatus 14 will be described. FIG. 4 is a block diagram showing an example of a functional configuration of the management apparatus 14.

Functionally, as shown in FIG. 4, the management apparatus 14 is configured to include a material management unit 50, a material management database (DB) 51, a pre-processing management unit 52, a pre-processing management database (DB) 53, a printing management unit 54, a printing management database (DB) 55, a post-processing management unit 56, and a post-processing management database (DB) 58.

The material management unit 50 manages information on each of the printing papers delivered from the manufacturer of the printing paper.

The material management database 51 stores information on each of the printing papers delivered from the manufacturer of the printing paper, which is acquired by the material management unit 50. The information on the printing paper includes, for example, information related to a manufacturer, a paper brand, a paper size, a paper weight, and the number of days elapsed from delivery.

The pre-processing management unit 52 manages the operation of the pre-processing unit of the printing apparatus 12 and acquires information related to the pre-processing.

The pre-processing management database 53 stores information related to the pre-processing acquired by the pre-processing management unit 52. The information related to the pre-processing includes, for example, an image density.

The printing management unit 54 manages the operation of the printing unit 24 of the printing apparatus 12 and acquires information related to the printing process.

The printing management database 55 stores information related to the printing process acquired by the printing management unit 54. The information related to the printing process includes, for example, a temperature, humidity, and a printing time point in the environment of the printing apparatus 12 detected by a sensor.

The post-processing management unit 56 manages the operation of the post-processing unit 46 of the printing apparatus 12 and acquires information related to the post-processing.

The post-processing management database 58 stores information related to the post-processing acquired by the post-processing management unit 56. The information related to the post-processing includes, for example, model information of the robot 13, a parameter of a program related to the robot 13, and an operation result of the robot 13.

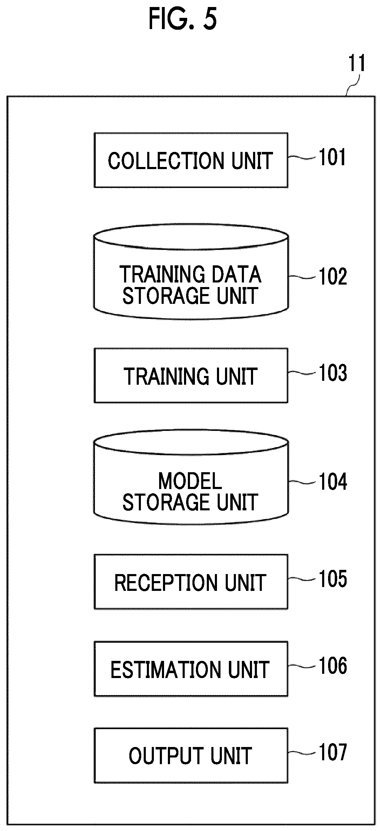

Next, functional configurations of the server 11 will be described. FIG. 5 is a block diagram illustrating an example of functional configurations of the server 11.

Functionally, the server 11 is configured to include a collection unit 101, a training data storage unit 102, a training unit 103, a model storage unit 104, a reception unit 105, an estimation unit 106, and an output unit 107 as shown in FIG. 5.

The collection unit 101 collects training data including input information related to a plurality of printing jobs processed in the past and a pair of a parameter and an operation result of a program related to the robot 13 corresponding to the input information.

The input information may include information related to printing paper. Specifically, the information related to printing paper includes at least one of information related to a manufacturer of the printing paper, a type of the printing paper, a size of the printing paper, a weight of the printing paper, or the number of days elapsed since the printing paper has been delivered.

The collection unit 101 collects the information related to printing paper in each of printing jobs in the past from the material management database 51 of the management apparatus 14.

In addition, the input information may include information related to an image printed on the printing paper. Specifically, the information related to the image printed on the printing paper includes a printed image density.

The collection unit 101 collects information related to an image printed according to the printing paper in each of the printing jobs in the past from the pre-processing management database 53 of the management apparatus 14.

In addition, the input information may include information related to the environment of the printing apparatus 12. Specifically, the information related to the environment of the printing apparatus 12 includes at least one of a temperature or a humidity.

The collection unit 101 collects information related to the environment of the printing apparatus 12 in each of the printing jobs in the past from the printing management database 55 of the management apparatus 14.

In addition, the input information may include information related to the robot 13. Specifically, the information related to the robot 13 includes model information of the robot 13.

The collection unit 101 collects information related to the robot 13 in each of the printing jobs in the past from the post-processing management database 58 of the management apparatus 14.

The collection unit 101 acquires the parameter and the operation result of the program related to the robot 13 in each of the printing jobs in the past from the post-processing management database 58 of the management apparatus 14.

The parameter of the program related to the robot 13 includes a parameter set in the program for operating the robot 13. As an example of the parameter, an operation speed, coordinates, trajectory, external cooperation, and the like may be included. In addition, the operation result is obtained by using a camera that images the robot 13 or a sensor that detects data related to the robot 13, and includes information related to the presence or absence of an error that occurs in a case where the robot 13 is operated and the content of the error.

The training data storage unit 102 stores a plurality of pieces of training data collected by the collection unit 101.

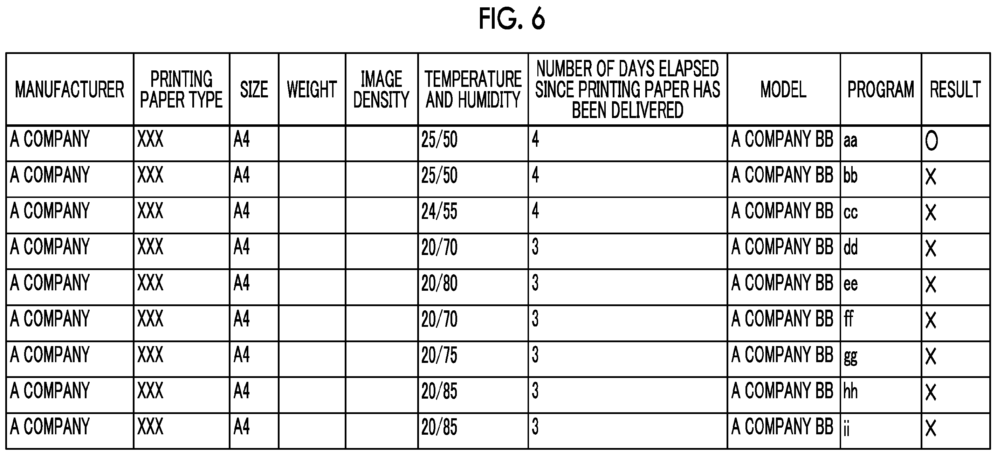

For example, as shown in FIG. 6, information related to a manufacturer, a type of printing paper, a size of printing paper, a weight of printing paper, a printed image density, temperature and humidity, the number of days elapsed since the printing paper has been delivered, a model of a robot, a program related to the robot, and an operation result are stored in the training data storage unit 102 for each piece of training data.

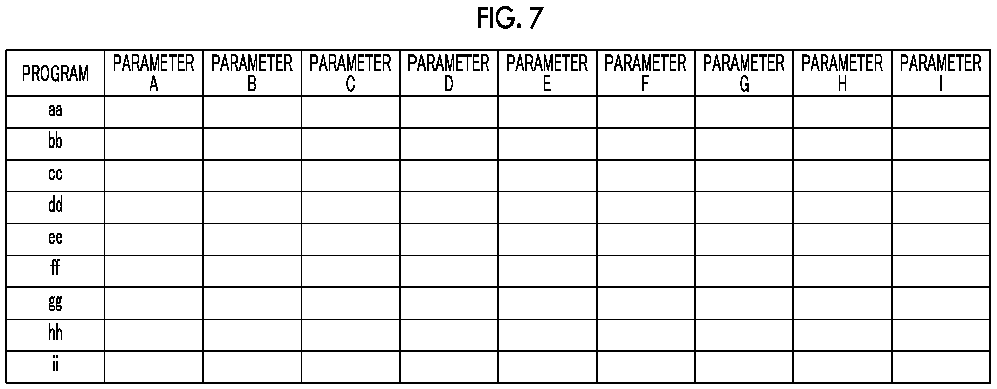

In addition, as shown in FIG. 7, the value of each parameter set in each program with respect to each program related to the robot is stored in the training data storage unit 102.

The training unit 103 constructs a neural network model for estimating a parameter of a program related to the robot 13, which corresponds to the input information, using the input information as an input based on a plurality of pieces of training data.

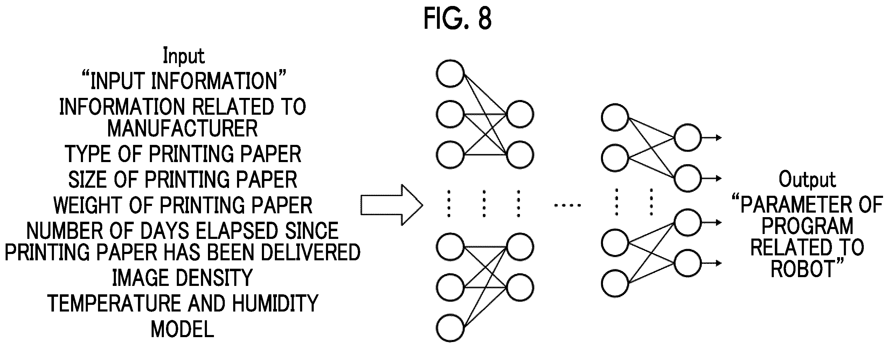

Specifically, the trained neural network model receives the input of the input information including at least one of the information related to a manufacturer, the type of printing paper, the size of printing paper, the weight of printing paper, the number of days elapsed since the printing paper has been delivered, the printed image density, the temperature, the humidity, or the model of the robot 13, and outputs the parameter of a program related to the robot 13 corresponding to the input information (see FIG. 8). Deep learning can be used as an example of the learning algorithm, and the neural network model may be constructed such that the parameter of the program related to the robot 13 is output when the input information of the training data is input.

More specifically, the parameters of the model may be updated such that the input information of the training data is used as an input, the parameter of the program related to the robot 13 is estimated as an output of the model, the estimated parameter of the program related to the robot 13 and the parameter of the program related to the robot 13 of the training data are compared with each other, the error of the parameter of the program related to the robot 13 is calculated, the value of the error in a case where there is no error in the operation result is minimized, and the value of the error in a case where the error occurs in the operation result is increased.

Here, a correlation between the input information and the parameter of the program related to the robot 13 will be described.

Since the size, weight, material, and the like of the printing paper vary according to the information related to the printing paper, the operation of the robot 13 gripping the printing paper is affected. Therefore, there is a correlation between the information related to the printing paper and the parameter of the program related to the robot 13.

In addition, since the amount of toner or ink on the printing paper varies according to information related to an image printed on the printing paper, and the weight, texture, and the like of the printing paper on which the image is printed vary, so that the operation of the robot 13 gripping the printing paper is affected. Therefore, there is a correlation between the information related to the image printed on the printing paper and the parameter of the program related to the robot 13.

In addition, since the contact state between the printing paper and the robot 13 varies according to the information related to the environment of the printing apparatus, the operation of the robot 13 gripping the printing paper is affected. Therefore, there is a correlation between the information related to the environment of the printing apparatus and the parameter of the program related to the robot 13.

In addition, the printing paper is wrinkled according to the number of days elapsed after the printing paper has been delivered, and the operation of the robot 13 gripping the printing paper is affected. Therefore, there is a correlation between the information related to the image printed on the printing paper and the parameter of the program related to the robot 13.

The model storage unit 104 stores a trained neural network model.

The reception unit 105 receives input information related to a printing job to be newly processed, which is an estimation target.

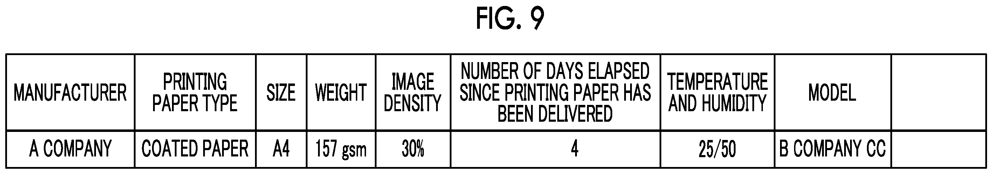

The input information includes the information related to printing paper. Specifically, the information related to printing paper includes at least one of information related to a manufacturer of the printing paper, a type of the printing paper, a size of the printing paper, a weight of the printing paper, or the number of days elapsed since the printing paper has been delivered. For example, the reception unit 105 receives information "A company" related to a manufacturer of the printing paper, a type "coated paper" of the printing paper, a size "A4" of the printing paper, a weight "157 gsm" of the printing paper, and the number of days "4 days" elapsed since the printing paper has been delivered, which are input from the user or acquired from the material management unit 50 (see FIG. 9).

In addition, the input information may include information related to an image printed on the printing paper. Specifically, the information related to the image printed on the printing paper includes a printed image density. For example, the reception unit 105 receives the printed image density "30%" analyzed by the pre-processing management unit 52 (see FIG. 9).

In addition, the input information may include information related to the environment of the printing apparatus 12. Specifically, the information related to the environment of the printing apparatus 12 includes at least one of a temperature or a humidity. For example, the reception unit 105 receives the temperature "25 degrees" and the humidity "50%" acquired from a sensor that detects the temperature or the humidity in the environment in which the printing apparatus 12 is installed (see FIG. 9).

In addition, the input information may include information related to the robot 13. Specifically, the information related to the robot 13 includes model information of the robot 13. For example, the reception unit 105 receives the model information "B company CC" of the robot 13 acquired by the post-processing management unit 56 (see FIG. 9).

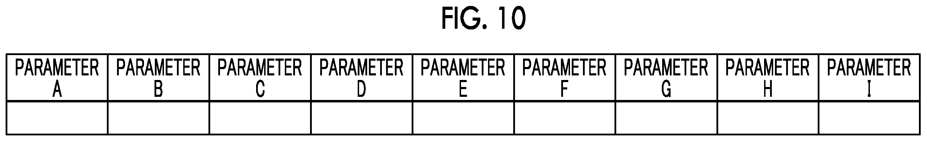

The estimation unit 106 estimates the parameter of the program related to the robot 13 corresponding to the received input information by using the trained neural network model stored in the model storage unit 104 (FIG. 10). FIG. 10 shows an example in which each of the values of parameter A to parameter I is estimated as the parameter of the program related to the robot 13.

Specifically, various types of information included in the received input information are converted into a data structure (for example, a scalar value, a vector, and the like) that can be input to the trained neural network model, the data structure obtained through the conversion is input to the trained neural network model, and the parameter of the program related to the robot 13 is estimated from the output of the training model.

The output unit 107 transmits the estimated parameter of the program related to the robot 13 to the management apparatus 14. Accordingly, the post-processing management unit 56 of the management apparatus 14 sets the estimated parameter of the program related to the robot 13 for the robot 13.

Next, specific processing performed by each part of the information processing system 10 according to the present exemplary embodiment configured as described above will be described.

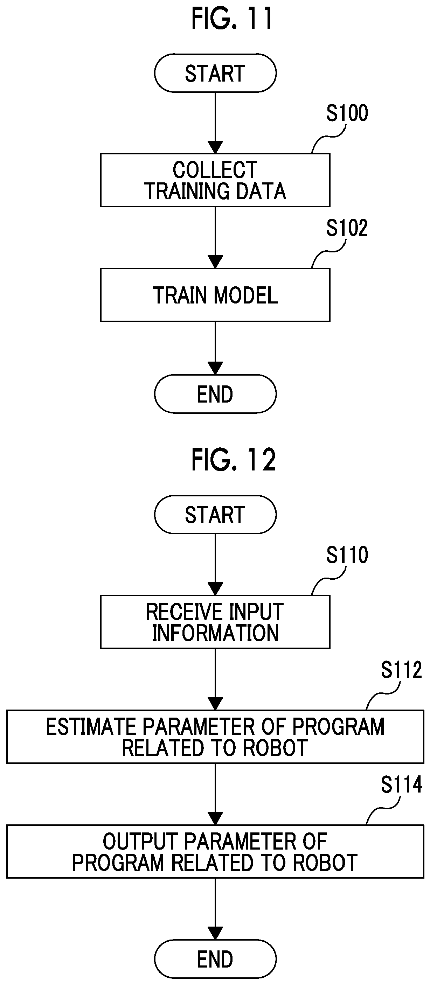

First, in the server 11, the CPU 11A reads out the training program from the ROM 11B or the storage 11D, loads the training program into the RAM 11C, and executes the training program, so that a training process shown in FIG. 11 is performed.

In step S100, the CPU 11A collects, as the collection unit 101, training data including the input information related to a plurality of printing jobs processed in the past and a pair of the parameter and the operation result of the program related to the robot 13 corresponding to the input information, and stores the training data in the training data storage unit 102.

In step S102, the CPU 11A, as the training unit 103, trains a neural network model for estimating the parameter of the program related to the robot 13 corresponding to the input information using the input information as an input based on the plurality of pieces of training data, stores the neural network model in the model storage unit 104, and ends the training process.

Next, in the server 11, the CPU 11A reads out an estimation program from the ROM 11B or the storage 11D, loads the estimation program into the RAM 11C, and executes the estimation program, so that the estimation process shown in FIG. 12 is performed. In this case, it is assumed that various types of information included in the input information in the new printing to be estimated are input.

In step S110, the CPU 11A receives, as the reception unit 105, the input information in the new printing which is the estimation target and is input by the user or acquired from the management apparatus 14.

In step S112, the CPU 11A estimates, as the estimation unit 106, the parameter of the program related to the robot 13 corresponding to the received input information by using the trained neural network model stored in the model storage unit 104.

In step S114, the CPU 11A transmits, as the output unit 107, the estimated parameter of the program related to the robot 13 to the management apparatus 14, and ends the estimation process.

The post-processing management unit 56 of the management apparatus 14 sets the estimated parameter of the program related to the robot 13 in the robot 13. Then, in a case where the post-processing unit 46 is operated in the printing apparatus 12, the robot 13 grips, moves, and cuts the printing paper in accordance with the operation of the post-processing unit 46. In this case, the robot 13 performs operations such as gripping, moving, and cutting of the printing paper using the parameter of the set program.

By performing the processes in this way, it is possible to predict the parameter related to the robot for the printing paper according to the printing paper.

### [Second Exemplary Embodiment]

Next, an information processing system according to a second exemplary embodiment will be described. Since the information processing system according to the second exemplary embodiment has the same configuration as the first exemplary embodiment, the identical reference numerals are assigned and the description thereof will be omitted.

The second exemplary embodiment is difference from the first exemplary embodiment in that a large-scale language model is used as the training model.

The collection unit 101 of the server 11 according to the second exemplary embodiment collects training data including input information related to a plurality of printing jobs processed in the past and a pair of a program including parameters of the program related to the robot 13 and an operation result corresponding to the input information.

The training unit 103 trains the large-scale language model by inputting the input information and the prompt sentence for instructing the output of a program including a parameter related to a robot 13 to the large-scale language model based on a plurality of pieces of the training data in which the operation result has no error, such that the program including the parameter related to the robot included in the training data is output from the output of the large-scale language model. Specifically, the training unit 103 performs additional training of the large-scale language model by using fine-tuning of the large-scale language model.

The model storage unit 104 stores a trained large-scale language model.

The reception unit 105 receives input information related to a printing job to be newly processed, which is an estimation target.

The estimation unit 106 estimates a program including a parameter of the program related to the robot 13, which corresponds to the received input information, by using the trained large-scale language model stored in the model storage unit 104.

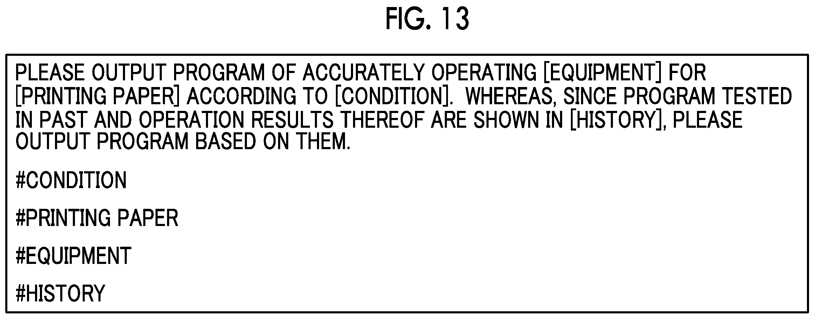

Specifically, the estimation unit 106 creates a prompt sentence for instructing the output of the program including the received input information and including the parameter related to the robot 13. For example, as shown in FIG. 13, the prompt sentence for instructing the output of a program for operating the robot 13 on the printing paper is created using a template of the prompt sentence, the received input information, and the training data. Under "# condition" in FIG. 13, a condition related to the program to be output is added. Under "# printing paper" in FIG. 13, information related to a manufacturer, a type of printing paper, a size of printing paper, a weight of printing paper, the number of days elapsed since the printing paper has been delivered, a printed image density, a temperature, and a humidity included in the received input information are added. The model of the robot 13 included in the received input information is added to "# equipment" in FIG. 13. In "# history" of FIG. 13, input information related to a plurality of printing jobs processed in the past, which is included in each of the plurality of pieces of training data, and a pair of the program including the parameter of the program related to the robot 13 and the operation result corresponding to the input information is added.

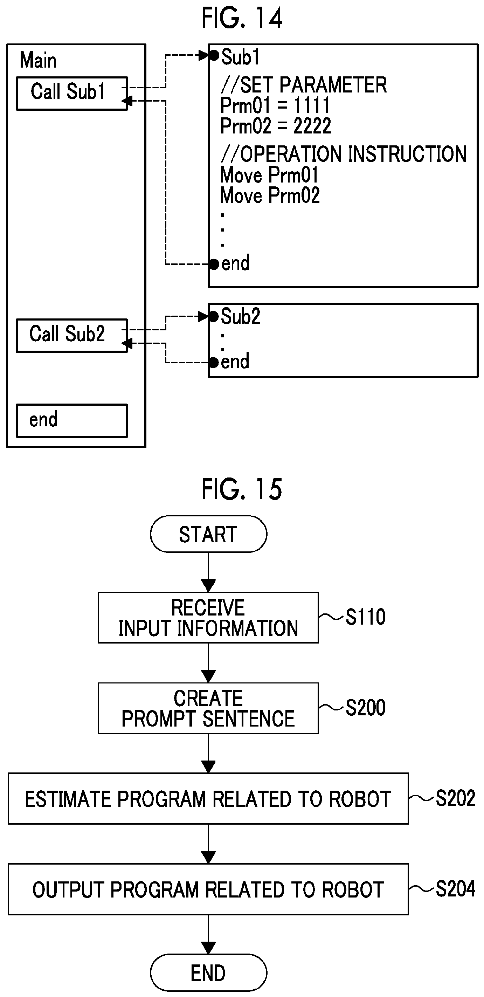

The estimation unit 106 acquires the program including the parameter related to the robot 13 from the output of the large-scale language model by inputting the created prompt sentence to the large-scale language model. For example, a program as shown in FIG. 14 is acquired. FIG. 14 shows an example in which the main process of the program reads out two subroutines Sub1 and Sub2, and the setting of the parameters Prm01 and Prm02 and the operation instruction based on the set parameters Prm01 and Prm02 are described in the subroutine Sub1.

The output unit 107 transmits the program including the estimated parameter of the program related to the robot 13 to the management apparatus 14. Accordingly, the post-processing management unit 56 of the management apparatus 14 sets the program including the estimated parameter of the program related to the robot 13 for the robot 13.

First, in the server 11, the CPU 11A reads out the training program from the ROM 11B or the storage 11D, loads the training program in the RAM 11C, and executes the training program, so that the same process as in the training process shown in FIG. 11 is performed. In the present exemplary embodiment, the training process may be omitted.

Next, in the server 11, the CPU 11A reads out the estimation program from the ROM 11B or the storage 11D, loads the estimation program into the RAM 11C, and executes the estimation program, so that the estimation process shown in FIG. 15 is performed. In this case, it is assumed that various types of information included in the input information in the new printing to be estimated are input.

In step S110, the CPU 11A receives, as the reception unit 105, the input information in the new printing which is the estimation target and is input by the user or acquired from the management apparatus 14.

In step S200, the CPU 11A creates, as the estimation unit 106, the prompt sentence for instructing the output of the program including the received input information and including the parameter related to the robot 13.

In step S202, the CPU 11A, as the estimation unit 106, acquires a program including a parameter related to the robot 13 from the output of the large-scale language model by inputting the created prompt sentence to the trained large-scale language model stored in the model storage unit 104.

In step S204, the CPU 11A transmits, as the output unit 107, the estimated program related to the robot 13 to the management apparatus 14, and ends the estimation process.

The post-processing management unit 56 of the management apparatus 14 installs the estimated program related to the robot 13 in the robot 13. Then, in a case where the post-processing unit 46 is operated in the printing apparatus 12, the robot 13 grips, moves, and cuts the printing paper in accordance with the operation of the post-processing unit 46. In this case, the robot 13 performs operations such as gripping, moving, and cutting of the printing paper according to the installed program.

By performing the processes in this way, it is possible to generate a program related to the robot for the printing paper according to the printing paper.

### <Modification Example>

The present invention is not limited to the above-described exemplary embodiment, and various modifications and applications are possible without departing from the gist of the present invention.

In the second exemplary embodiment, instead of the program related to the robot, the parameter of the program related to the robot may be acquired from the output of the large-scale language model by inputting a prompt sentence for instructing the output of the parameter of the program related to the robot to the large-scale language model.

In addition, in the first exemplary embodiment or the second exemplary embodiment, an operation result, which is acquired when the robot is caused to output the estimated parameter of the program related to the robot or the program related to the robot may be acquired from the robot, and the parameter of the program related to the robot or the program related to the robot may be estimated again by using the program and the operation result which are input previously.

In addition, a case where various types of information of the input information are received and the parameter of the program related to the robot is estimated has been described as an example, but the parameter of the program related to the robot may be estimated by receiving a part of various types of information of the input information without receiving all of the various types of information of the input information.

In addition, a case where the server 11 trains the model and estimates the parameter of the program related to the robot has been described as an example, but the server 11 may be configured to be divided into a training apparatus that trains the model and an estimation apparatus that estimates the parameter of the program related to the robot.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

In the exemplary embodiments described above, the operation of the processor may not only be performed by one processor, but may also be performed by a plurality of processors which are located physically apart from each other cooperatively.

Also, the order of each operation of the processor is not limited to one described in the exemplary embodiments described above, and may be changed as appropriate.

In addition, the "system" in the present exemplary embodiment is described as an example of a system configured to include a plurality of apparatus, but may be configured to include a single apparatus having a part of functions of the plurality of apparatus.

The processes executed by the printing apparatus 12 according to the above exemplary embodiment may be processes executed by software, processes executed by hardware, or a combination of both. In addition, the processes executed by the printing apparatus 12 may be stored in a storage medium as a program and distributed. In addition, the technology of the present disclosure may be applied to a program product.

In addition, the present disclosure is not limited to the above description, and various modifications other than the above description may be made without departing from the gist thereof.

Regarding the above exemplary embodiments, the following supplementary notes will be further disclosed.
(((1))) An information processing system comprising:
   a processor configured to:
   acquire input information including information related to printing paper;
   acquire a parameter related to a robot that performs an operation on the printing paper, which is output from a training model by inputting the input information to the training model; and
   output the parameter.
(((2))) The information processing system according to (((1))),
   wherein the information related to the printing paper includes information related to a manufacturer of the printing paper, a type of the printing paper, a size of the printing paper, a weight of the printing paper, or the number of days elapsed since the printing paper has been delivered.
(((3))) The information processing system according to ((1)) or ((2))),
   wherein the input information further includes information related to an image printed on the printing paper, information related to an environment of a printing apparatus, or information related to the robot.
(((4))) The information processing system according to any one of (((1))) to (((3))), wherein the processor is configured to:
   acquire a program related to the robot, which includes the parameter corresponding to the input information, by inputting the input information to the training model; and
   output the program.
(((5))) The information processing system according to any one of (((1))) to (((4))),
   wherein the training model is a large-scale language model, and
   the processor is configured to:
      acquire the parameter related to the robot from an output of the large-scale language model by inputting the input information and a prompt sentence for giving an instruction to output the parameter related to the robot to the large-scale language model.
(((6))) The information processing system according to any one of (((1))) to (((5))), wherein the processor is configured to:
   acquire a result of the operation of the robot, which is instructed by a program including the generated parameter;
   acquire the parameter output from the training model by inputting the input information including the acquired result to the training model; and
   output the acquired parameter.
(((7))) An information processing program causing a computer to execute:
   acquiring input information including information related to printing paper;
   acquiring a parameter related to a robot that performs an operation on the printing paper, which is output from a training model by inputting the input information to the training model; and
   outputting the parameter.

According to (((1))), it is possible to predict the parameter related to the robot for the printing paper according to the printing paper.

According to (((2))), it is possible to predict the parameter related to the robot with respect to the printing paper in consideration of the information related to the manufacturer of the printing paper, the type of the printing paper, the size of the printing paper, the weight of the printing paper, or the number of days elapsed since the printing paper has been delivered.

According to (((3))), it is possible to predict the parameter related to the robot for the printing paper based on information related to an image printed on the printing paper, information related to an environment of the printing apparatus, or information related to the robot.

According to (((4))), it is possible to predict the program related to the robot for the printing paper according to the printing paper.

According to (((5))), it is possible to predict the parameter related to the robot for the printing paper using the large-scale language model.

According to (((6))), it is possible to predict the parameter related to the robot for the printing paper based on the result of the operation of the robot.

According to (((7))), it is possible to predict the parameter related to the robot for the printing paper according to the printing paper.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information processing system
11: server
12: printing apparatus
13: robot
14: management apparatus
24: printing unit
46: post-processing unit
101: collection unit
102: training data storage unit
103: training unit
104: model storage unit
105: reception unit
106: estimation unit
107: output unit

## Claims

1. An information processing system comprising:
a processor configured to:
acquire input information including information related to printing paper;
acquire a parameter related to a robot that performs an operation on the printing paper, which is output from a training model by inputting the input information to the training model; and
output the parameter.

2. The information processing system according to claim **1,**
wherein the information related to the printing paper includes information related to a manufacturer of the printing paper, a type of the printing paper, a size of the printing paper, a weight of the printing paper, or the number of days elapsed since the printing paper has been delivered.

3. The information processing system according to claim 1 or 2,
wherein the input information further includes information related to an image printed on the printing paper, information related to an environment of a printing apparatus, or information related to the robot.

4. The information processing system according to any one of claims 1 to 3, wherein the processor is configured to:
acquire a program related to the robot, which includes the parameter corresponding to the input information, by inputting the input information to the training model; and
output the program.

5. The information processing system according to any one of claims 1 to 4,
wherein the training model is a large-scale language model, and
the processor is configured to:
acquire the parameter related to the robot from an output of the large-scale language model by inputting the input information and a prompt sentence for giving an instruction to output the parameter related to the robot to the large-scale language model.

6. The information processing system according to any one of claims 1 to 5, wherein the processor is configured to:
acquire a result of the operation of the robot, which is instructed by a program including the generated parameter;
acquire the parameter output from the training model by inputting the input information including the acquired result to the training model; and
output the acquired parameter.

7. An information processing program causing a computer to execute:
acquiring input information including information related to printing paper;
acquiring a parameter related to a robot that performs an operation on the printing paper, which is output from a training model by inputting the input information to the training model; and
outputting the parameter.

8. An information processing method comprising:
acquiring input information including information related to printing paper;
acquiring a parameter related to a robot that performs an operation on the printing paper, which is output from a training model by inputting the input information to the training model; and
outputting the parameter.
